# EUROPÄISCHE PATENTSCHRIFT

(11) **EP 2 632 750 B1**
(45) Veröffentlichungstag und Bekanntmachung des Hinweises auf die Patenterteilung: **22.04.2020**
(21) Anmeldenummer: 11776742.6
(22) Anmeldetag: 25.10.2011
(51) Int. Cl.: B60J 5/10

(54) **FUGENLOSE HECKKLAPPE**
SEAMLESS TAILGATE
HAYON SANS JOINTS

(30) Priorität: 26.10.2010 DE 102010042939
(43) Veröffentlichungstag der Anmeldung: 04.09.2013
(73) Patentinhaber: Covestro Deutschland AG, 51373 Leverkusen (DE)
(72) Erfinder: NAWROTH, Manfred, 51688 Wipperfürth (DE); GROSSER, Ulrich, 51515 Kürten (DE); KRAUSE, Volkhard, 51381 Leverkusen (DE); WAGNER, Michael, 47443 Moers (DE)
(74) Vertreter: Levpat
(86) Internationale Anmeldenummer: PCT/EP2011/068667
(87) Internationale Veröffentlichungsnummer: WO 2012/055873

(56) Entgegenhaltungen:
- EP-A2- 0 266 514
- EP-A2- 1 787 841
- WO-A2-2006/053547
- JP-A- 10 329 165

## Beschreibung

Die Erfindung betrifft ein Verfahren zur Herstellung von fugenlos gefertigten Fahrzeugbauteilen in Form von Heckklappen, mit einem durchgehenden Träger aus einem thermoplastischen Kunststoff, die mindestens einen transparenten Bereich aufweisen, der integraler Bestandteil des Trägers ist.

Um im Automobilbau das Karosseriegewicht zu reduzieren, werden z.B. Glasscheiben durch transparente Kunststoffscheiben ersetzt. Darüber hinaus werden schon seit langem auch viele außenliegende Fahrzeugbauteile aus Kunststoff gefertigt, wie z.B. Stoßfänger und Schutzkanten.

Bezüglich der Fahrzeugbauteile besteht ein großes Interesse daran, verschiedene Funktionselemente in die Bauteile zu integrieren, den Bauteilaufbau jedoch so zu gestalten, daß die Bauteile einteilig auf Basis eines einzigen Trägermaterials gefertigt werden können.

Hierbei müssen insbesondere großflächige Bauteile über eine ausreichende Steifigkeit verfügen, um den an sie gestellten mechanischen Anforderungen gerecht werden zu können. Gleichzeitig sollten die Bauteile jedoch so ausgelegt sein, daß sie ein möglichst niedriges Eigengewicht aufweisen.

Im Automobilbau bestehen zudem speziell für hochpreisige Fahrzeuge ambitionierte Anforderungen bezüglich des optischen Erscheinungsbildes der verbauten Materialien. Inhomogenitäten, beziehungsweise optische Störungen in der Bauteiloberfläche sind in diesem Zusammenhang nicht akzeptabel.

Zudem sind aufgrund des immer komplexer werdenden Aufbaus von Fahrzeugbauteilen aktuell vermehrt effiziente Fertigungsverfahren gefragt, die es ermöglichen, die Bauteile in möglichst wenigen Schritten herzustellen.

Aus WO 2006/053547 A2 ist eine Klappe für ein Kraftfahrzeug bekannt, die insbesondere als Heckklappe ausgestaltet sein kann. Die Heckklappe kann ein Trägerelement aufweisen, welches einschließlich einer Fensterscheibe einstückig geformt sein kann, beispielsweise aus Polycarbonat. Dabei können diejenigen Bereiche des Trägerelementes, die keine Bestandteile der Fensterscheibe bilden, eingefärbt oder mit einer lichtundurchlässigen Folie überzogen sein.

Es ist somit Aufgabe der vorliegenden Erfindung, fugenlos gefertigte Fahrzeugbauteile mit hoher Steifigkeit und mit geringem Gewicht, aufweisend mindestens einen integrierten transparenten Bereich und ein oder mehrere integrierte Funktionselemente zur Verfügung zu stellen, wobei die gesamte Bauteiloberfläche eine durchgängige, fugenlose ausgezeichnete optische Qualität aufweist.

Ferner ist es eine Aufgabe der vorliegenden Erfindung ein Verfahren zur Herstellung der erfindungsgemäßen Fahrzeugbauteile bereitzustellen, in dem alle Fertigungsschritte nebst Integration der Funktionselemente in einem Werkzeug realisierbar sind und ein nachträgliches Anbringen und Abdichten der Funktionselemente entfällt.

Die gestellte Aufgabe konnte überraschenderweise durch ein Fahrzeugbauteil in Form einer Heckklappe gemäß Anspruch 1 und ein Verfahren zu deren Herstellung nach Anspruch 14 gelöst werden.

Hierbei weist der Träger eine Dicke von 3 - 7 mm, bevorzugt von 4 - 6 mm, besonders bevorzugt von 4,5 - 5,5 mm auf. Die Dicke des Trägers variiert über das gesamte Bauteil maximal um 10%, vorzugsweise maximal um 5%.

Fugenlos im Sinne der vorliegenden Erfindung bedeutet, daß die äußere Oberfläche des Bauteils keine Fugen oder Übergänge mit einer Tiefe von mehr als 0,20 mm, weiter bevorzugt von mehr als 0,15 mm, und besonders bevorzugt von mehr als 0,10 mm aufweist. Die Fugen oder Übergänge haben weiterhin vorzugsweise eine Breite von nicht mehr als 0,20 mm, weiter bevorzugt von nicht mehr als 0,15 mm, und besonders bevorzugt von nicht mehr als 0,10 mm.

Der Träger besteht aus einem thermoplastischen Kunststoff, welcher bevorzugt transparent ist, und kann vollkommen eben oder unterschiedlich stark gekrümmt ausgeführt sein. In der ebenen wie in den gekrümmten Ausführungsformen kann der Träger darüber hinaus zusätzlich weiter strukturiert und/oder ausgeformt sein.

Ferner weist der Träger eine äußere Oberfläche von mindestens 360000 mm² auf. Bevorzugt weist der Träger eine Oberfläche zwischen 360000 mm² und 3600000 mm², weiter bevorzugt zwischen 360000 mm² und 3300000 mm², weiter bevorzugt zwischen 810000 mm² und 3000000 mm² sowie besonders bevorzugt zwischen 810000 mm² und 2500000 mm² auf.

In einer alternativen Ausführungsform besteht ein Teil des Trägers aus einem transparenten Kunststoff, während ein zweiter Teil aus einem direkt angespritzten nicht-transparenten Kunststoff besteht, wobei die Anspritzübergänge die oben genannten Anforderungen hinsichtlich der Fugen und Übergänge erfüllen. Vorzugsweise bestehen der transparente Teil aus Polycarbonat und der nicht-transparente Teil aus einem Polycarbonatblend, vorzugsweise mit Acrylnitrilbutadien oder Polyester (z.B. PET, PBT). Der Übergang der Materialien liegt vorzugsweise in Kantenbereichen, so daß eventuell auftretende Unebenheiten kaschiert werden.

Transparent im Sinne der vorliegenden Erfindung bedeutet, daß der Kunststoff eine Lichtransmission (in Anlehnung an ASTM 1003 bzw. ISO 13468; angegeben in % und Lichtart D65/10°) von mindestens 6 %, weiter bevorzugt von mindestens 12 %, und besonders bevorzugt von mindestens 23 % aufweist. Weiterhin ist die Trübung vorzugsweise kleiner als 3 %, weiter bevorzugt kleiner als 2,5 %, und besonders bevorzugt kleiner als 2,0 %.

Thermoplastische Kunststoffe, die zur Herstellung des Trägers der erfindungsgemäßen Fahrzeugbauteile verwendet werden können, sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat.

Auch Mischungen von mehreren thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Eine weitere spezielle Ausführungsform enthält in diesem Zusammenhang eine Mischung aus Polycarbonat und PMMA mit weniger als 2,0 Gew.%, vorzugsweise weniger als 1,0 Gew.%, weiter bevorzugt weniger als 0,5 Gew.%, wobei mindestens 0,01 Gew.% PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2 Gew.%, und besonders bevorzugt 0,1 Gew.%, bezogen auf die Menge Polycarbonat, wobei das PMMA bevorzugt ein Molgewicht <40.000 g/mol aufweist.

Eine alternative weitere spezielle Ausführungsform enthält eine Mischung aus PMMA und Polycarbonat mit weniger als 2 Gew.%, vorzugsweise weniger als 1 Gew.%, weiter bevorzugt weniger als 0,5 Gew.%, wobei mindestens 0,01 Gew.% Polycarbonat enthalten sind bezogen auf die Menge PMMA,

In einer besonders bevorzugten Ausführungsform beträgt der Anteil an Polycarbonat 0,2 Gew.%, und besonders bevorzugt 0,1 Gew.%, bezogen auf die Menge PMMA.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Polycarbonate können darüber hinaus übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, organische oder anorganische Farbmittel, Thermostabilisatoren, anorganische Pigmente, Entformungsmittel oder Verarbeitungshilfsmittel enthalten.

Ferner können. UV-Absorber oder IR-Absorber enthalten sein. Geeignete UV-Absorber sind beispielsweise beschrieben in der EP 1 308 084 A1, in der DE 102007011069 A1 sowie in der DE 10311063 A1.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart.

Von den in der zitierten Literatur genannten IR-Absorbern sind solche auf Borid- und Wolframatbasis sowie auf ITO und ATO basierende Absorber sowie Kombinationen daraus bevorzugt.

In einer besonders bevorzugten Ausführungsform der vorliegenden Erfindung ist der thermoplastische Kunststoff für den Träger des Fahrzeugbauteils ein Polycarbonat mit einem Molekulargewicht M_{w} von 22.000 bis 30.000, weiter bevorzugt von 24.000 bis 28.000 und besonders bevorzugt von 25.000 bis 27.000, ermittelt durch Gelpermeationschromatographie mit Polycarbonateichung.

Die Fließfähigkeit des für die Herstellung des Trägers verwendeten Polycarbonats reicht ferner aus, um im Spritzprägeprozeß Fließwege von 600 mm bis 1200 mm, bevorzugt 800 mm bis 1100 mm, besonders bevorzugt 900 mm bis 1000 mm zu realisieren, wobei die Schmelzetemperatur vorzugsweise von 280 °C bis 320 °C, weiter bevorzugt von 300 °C bis 310 °C beträgt, die Werkzeugtemperatur vorzugsweise von 60 °C bis 110 °C, weiter bevorzugt von 80 °C bis 100 °C beträgt, der Fülldruck von 50 bar bis 1000 bar, weiter bevorzugt von 80 bar bis 750 bar und besonders bevorzugt von 100 bar bis 500 bar liegt, und der Prägespalt von 0,5 mm bis 10 mm, vorzugsweise von 2 mm bis 7mm, besonders bevorzugt von 5 mm bis 6 mm ist.

Die erfindungsgemäßen Fahrzeugbauteile enthaltend den Träger aus thermoplastischem Kunststoff, nachfolgend auch als Basisschicht (I) des erfindungsgemäßen Fahrzeugbauteils bezeichnet, können zudem im Sinne eines mehrlagigen Verbundes weitere Schichten enthalten.

Hierbei bilden der Träger, alle mit diesem mittelbar oder unmittelbar verbundenen Schichten sowie die integrierten Funktionselemente das erfindungsgemäße Fahrzeugbauteil.

Folgende Funktionselemente können hierbei in dem erfindungsgemäße Fahrzeugbauteil integral ausgeformte und/oder eingebunden sein:
- Scharniere
- Heizelemente
- Antennen
- Schließfunktionalitäten
- Lampengehäuse /-aufnahme z.B. für Rücklichter, Blinker, Bremslichter, Kennzeichenbeleuchtung und hochgesetzte Bremsleuchte
- Scheibenwischer(und -motor)aufnahme
- Kennzeichenmulde
- Spoiler
- Stylinglinien
- Strukturelemente für das Wassermanagement (Ableiten von Spritz- und Regenwasser)
- Nummernschildaufnahme außen oder innen
- Solarmodule

Auf dem Träger können zusätzlich zu Schichten zur Ausbildung von Schwarzrändern und/ oder verstärkenden Rahmenelementen, welche aus den vorgenanten thermoplastischen Kunststoffen oder deren Mischungen hergestellt sein können und bevorzugt nicht transparent sind, zudem eine oder mehrere der folgenden Schichten in unterschiedlichen

Abfolgen entweder auf einer Seite des Trägers oder auf beiden Seiten des Trägers aufgebracht werden. Hierzu zählen:
- (II) Schichten zur Erhöhung der Kratzfestigkeit insbesondere über dem transparenten Sichtbereich des Fahrzeugbauteils.
- (III) Schichten zum Schutz vor Witterungseinflüssen beispielsweise enthaltend UV-Absorber und/oder IR-Absorber, wobei hierzu auch Reflexionsschichten für IR- und UV-Strahlung zählen (IR-Strahlung von 750 nm - 2500 nm, UV-Strahlung von 400 nm bis 180 nm) .
- (IV) Farbgebende Schichten enthaltend Farbmittel und oder Pigmente
- (VI) mechanische Verstärkungselemente,
- (VII) Funktionsschichten wie Antibeschlag-, Antireflexschichten sowie Schichten zur Transparenzsteuerung (Elektrochromie, Thermotropie, Thermochromie)
- (VIII) Dämm- und Isolierschichten

### Schichten zur Erhöhung der Kratzfestigkeit (II):

Es sind verschiedene Methoden bekannt, um eine Kratzfestbeschichtung im Sinne der vorliegenden Erfindung herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Flutbeschichtung aufgebracht werden. Die Aushärtung kann thermisch oder mittels UV-Bestrahlung erfolgen. In einer speziellen Ausführungsform wird Kratzfestschicht in einem Inline-Verfahren (Direct Coating / Direct Skinning) direkt auf den Träger aufgebracht.

Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma.

Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen.

In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm. Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten.

Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen.

Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT-2050 und SHP401 der Firma Momentive Performance Materials. Derartige Beschichtungen sind z.B. in US 6350512 B1, US 5869185, WO 2006/108520 sowie EP 1308084 beschrieben.

Kratzfest-Lacke (Hard-Coat) sind bevorzugt aus Siloxanen aufgebaut und enthalten bevorzugt UV-.Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden. Diese sind z.B. in EP 0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

In einem besonders bevorzugtem Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei könne die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zuschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

### Schichten zum Schutz von Witterungseinflüssen (III)

Die Schichten (III) basieren vorzugsweise auf thermoplastischen Kunststoffen, wobei hierbei vorzugsweise die thermoplastischen Kunststoffe, welche auch für die Herstellung des Trägers (I) verwendet werden, zum Einsatz kommen. Polycarbonate und Poly- oder Copolymethacrylate wie z.B. Poly- oder Copolymethylmethacrylate (wie PMMA) sind hierbei besonders bevorzugt. Die zur Herstellung von (III) verwendeten thermoplastischen Kunststoffe werden derart additiviert, daß deren Beständigkeit gegenüber Strahlung insbesondere im Bereich von 180 nm bis 400 nm und/oder im Bereich von 750 nm bis 2500 nm signifikant erhöht wird.

Hierzu werden UV-Absorber (siehe beispielsweise EP 1 308 084 A1, DE 102007011069 A1 oder DE 10311063 A1) und /oder IR Absorber (siehe beispielsweise EP 1 559 743 A1, EP 1 865 027 A1, DE 10022037 A1, DE 10006208 A1 sowie die italienischen Patentanmeldungen RM2010A000225, RM2010A000227 und RM2010A000228) eingesetzt.

Ferner können weitere übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen, optische Aufheller, Fließverbesserer, Thermostabilisatoren, Entformungsmittel oder Verarbeitungshilfsmittel enthalten sein.

Die Schichten zum Schutz vor Witterungseinflüssen (III) können nach Verfahren hergestellt werden, wie sie für die Fertigung von Mehrschichtsystemen aus einer Basis- und optionaler Deckschicht / optionalen Deckschichten üblich sind. Zu diesen Verfahren zählen die (Co)extrusion, Direct Skinning, Direct Coating, Insert Moulding, Folienhinterspritzen, oder sonstige dem Fachmann bekannte geeignete Verfahren.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Für die Herstellung von erfindungsgemäß vorgesehenen Schwarzrändern beziehungsweise verstärkenden Rahmenelementen (V) bietet sich als Material die Verwendung thermoplastischer Kunststoffe enthaltend Füll- beziehungsweise Verstärkungsstoffe, insbesondere die Verwendung von derart ausgerüsteten Kunststoff Blends an. In diesem Zusammenhang sind Blends enthaltend Polycarbonat und mindestens einen weiteren thermoplastischen Kunststoff bevorzugt.

Die verwendeten Füll- und Verstärkungsstoffe können faser-, plättchen-, röhren-, stäbchen- oder kugelförmig bzw. sphärisch oder partikulär sein. Zu den im Sinne der vorliegenden Erfindung geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In den Zusammensetzungen (V) ist der Gehalt an Füll- und Verstärkungsstoffen von 5 Gew.% bis 40 Gew.%, vorzugsweise von 7 Gew.% bis 30 Gew.%, weiter bevorzugt von 8 Gew.% bis 25 Gew.%., wobei sich die Gewichtsangaben auf die Gesamtzusammensetzung von (V) beziehen.

Ferner kann das für die Herstellung von (V) verwendete Material optional die in EP-A 0 839 623, WO-A 96/15102, EP-A 0 500 496 oder "Plastics Additives Handbook", Hans Zweifel, 5th Edition 2000, Hanser Verlag, München beschriebenen üblichen Polymeradditive enthalten.

Hierzu zählen unter anderem organische und/oder organische Farbmittel oder Pigmente, UV-Absorber, IR-Absorber, Entformungsmittel, Thermostabilisatoren oder Verarbeitungsstabilisatoren.

In einer speziellen Ausführungsform der vorliegenden Erfindung handelt es sich bei dem Kunststoff Blend um ein Blend enthaltend mindestens ein Polycarbonat um mindestens einen Polyester, wobei der Polyester bevorzugt ein Polyalkylenterephthalat, weiter bevorzugt ein Polyethylenterephthalat (PET) oder ein Polybutylenterephthalat (PBT) ist. Als Polyester besonders bevorzugt ist PET.

Der Mengenanteil von Polycarbonat in den Polycarbonat Polyester Blends beläuft sich auf 10 Gew.-% bis 90 Gew.-%, bevorzugt 30 Gew.-% bis 80 Gew.-%, weiter bevorzugt 35 Gew.-% bis 70 Gew.-%, besonders bevorzugt 40 Gew.-% bis 65 Gew.-% jeweils bezogen auf die Gesamtzusammensetzung von (V).

Der Mengenanteil des Polyesters in den Polycarbonat Polyester Blends beläuft sich auf 60 Gew.-% bis 5 Gew.-%, bevorzugt 50 Gew.-% bis 10 Gew.-%, weiter bevorzugt 35 Gew.-% bis 10 Gew.-%, besonders bevorzugt 25 Gew.-% bis 15 Gew.-% jeweils bezogen auf die Gesamtzusammensetzung von (V).

Optional können die Zusammensetzungen von (V) auch Elastomermodifikatoren enthalten die in Mengen von 0 Gew.-% bis 25 Gew.-%, bevorzugt 3 Gew.-% bis 20 Gew.-%, weiter bevorzugt 6 Gew.-% 20 Gew.-% und besonders bevorzugt 8 Gew.-% bis 18 Gew.-% enthalten sein können. Auch hier beziehen sich die Gew.-% Angaben auf die Gesamtzusammensetzung von (V)

In einer alternativen speziellen Ausführungsform der vorliegenden Erfindung handelt es sich bei dem bei dem Kunststoff Blend um eine Zusammensetzung umfassend die Kunststoffe A) und B), wobei
A) 10 bis 100 Gew.-Teile, bevorzugt 60 bis 95 Gew.-Teile, besonders bevorzugt 75 bis 95 Gew.-Teile, insbesondere 85 bis 95 Gew.-Teile (bezogen auf die Summe der Komponenten A) und B) mindestens einer Komponente ausgewählt aus der Gruppe bestehend aus aromatischem Polycarbonat, aromatischem Polyestercarbonat, Polymethylmethacrylat-(Co)Polymer und Polystyrol-(Co)Polymer, ist und
B) 0 bis 90 Gew.-Teile, bevorzugt 5 bis 40 Gew.-Teile, besonders bevorzugt 5 bis 25 Gew.-Teile, insbesondere 5 bis 15 Gew.-Teile (bezogen auf die Summe der Komponenten A)und B) mindestens eines Propfpolymerisats. Das Propfpolymerisat ist bevorzugt hergestellt im Emulsionspolymerisationsverfahren, Suspensionsverfahren, Massepolymerisationsverfahren, oder Lösungsverfahren.
C) optional kautschukfreies Vinylhomopolymerisat und/oder kautschukfreies Vinylcopolymerisat
wobei sich die Gewichtsteile der Komponenten A und B zu 100 addieren .

Die Komponente B umfasst vorzugsweise ein oder mehrere Pfropfpolymerisate von
B.1.1 5 bis 95, vorzugsweise 30 bis 90 Gew.-%, wenigstens eines Vinylmonomeren auf
B.1.2 95 bis 5, vorzugsweise 70 bis 10 Gew.-% einer oder mehrerer Pfropfgrundlagen.

Die Glasübergangstemperaturen der Propfgrundlagen sind vorzugsweise < 10°C, vorzugsweise < 0°C, besonders bevorzugt < -20°C.

Die Pfropfgrundlage B.1.2 hat im allgemeinen eine mittlere Teilchengröße (d₅₀-Wert) von 0,05 bis 10 µm, vorzugsweise 0,1 bis 5 µm, besonders bevorzugt 0,15 bis 1 µm.

Monomere B.1.1 sind vorzugsweise Gemische aus
B.1.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
B.1.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate B.1 sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.1.2 beträgt mindestens 30 Gew.-%, vorzugsweise mindestens 40 Gew.-% (in Toluol gemessen).

Die Glasübergangstemperaturen wird mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

Bevorzugt ist ist A) Polycarbonat und B) Acrylnitrilbutadienstyrol (ABS).

Zum Vermeiden von Bauteilspannungen ist darauf zu achten, daß die thermischen Ausdehnungskoeffizienten der einzelnen Schichten durch eine geeignete Materialauswahl aufeinander abgestimmt sind.

Dies ist insbesondere dann wichtig, da auf den Träger des erfindungsgemäßen Fahrzeugbauteils ein Schwarzrand beziehungsweise Rahmenelement unmittelbar aufgebracht wird.

Hierbei hat es sich als vorteilhaft herausgestellt, für den Schwarzrand beziehungsweise das Rahmenelement ein Material zu wählen, dessen linearer thermischer Ausdehnungskoeffizient in Längsrichtung (d.h. vom Anguß betrachtet in Richtung des Schmelzflusses, nachfolgend als RS abgekürzt) niedriger ist, als der des Materials des Trägers. Zudem sollte das RS/QS-Verhältnis des linearen thermischen Ausdehnungskoeffizienten des jeweiligen Material in einem relativ engen Bereich liegen, wobei QS die Querrichtung, d. h. die Richtung orthogonal zur vom Anguß betrachteten Richtung des Schmelzflusses meint.

In einer Ausführungsform der vorliegenden Erfindung ist der lineare thermische Ausdehnungskoeffizient des Rahmenmaterials in Längsrichtung um 1x10⁻⁵ bis 3x10⁻⁵ (mm/mm K) niedriger als der des Trägermaterials.

Der Quotient RS/RQ sollte in einem Bereich von 0,6 bis 1,0 liegen.

Das Material zur Ausbildung des Schwarzrandes beziehungsweise des verstärkenden Rahmenelements wird bevorzugt durch partielles Hinterspritzen des Trägers mit diesem verbunden.

Da der Träger bevorzugt aus einem transparenten thermoplastischen Kunststoff besteht, kann durch das Hinterspritzen des Schwarzrandes beziehungsweise des verstärkenden Rahmenelements ein Sichtbereich im Sinne einer Fensterscheibe dargestellt werden. Bezogen auf das gesamte erfindungsgemäße Fahrzeugbauteil beträgt der transparente Sichtbereich in Summe 10 - 90 %, weiter bevorzugt 20-75 % und besonders bevorzugt 30 - 50 % der Bauteilfläche und kann durchgängig oder in Form von transparenten Teilflächen, welche durch nicht transparentes hinterspritztes Material optisch voneinander getrennt sind, ausgeführt sein.

Auf diese Weise können transparente Oberflächen geschaffen werden, hinter denen Leuchten oder Kennzeichen angeordnet werden.

Der große Vorteil dieser Ausführungsform ist es, daß eine Scheibe nicht mehr, wie in bislang gängigen Serienkonzepten üblich, eingeklebt und abgedichtet werden muß, was den Aufwand bei Montage und Logistik vereinfacht.

Bei Motorhauben, Frontklappen und Heckklappen reduziert sich die Zahl der Bauteile für die Beleuchtungselemente mindestens um die Komponenten, die in der bisherigen Bauweise außen angebracht waren. Auch das Abdichten der Leuchten ist nicht mehr notwendig, ebenso konnte die Mulde für das Logo in das Bauteil integriert werden,

Die Transparenz des Trägermaterials ermöglicht zudem, das Fahrzeugkennzeichen hinter die den Träger zu verlegen, z.B. zum Diebstahlschutz. Anstelle separat montierter Schlösser und Öffnungsgriffe können außerdem Lichtsensoren hinter der Polycarbonat-Außenhaut installiert werden, mit denen sich die Klappe oder Tür öffnen und schließen lässt.

Die Verstärkungselemente (VI) verleihen dem erfindungsgemäßen Fahrzeugbauteil eine hohe Steifigkeit bei gleichzeitig niedrigem Gewicht und weisen im Rahmen der vorliegenden Erfindung bevorzugt einen Grundkörper, eine Rippenstruktur sowie ein Stützprofil auf und werden vorzugsweise im Spritzgussverfahren oder Extrusionsverfahren hergestellt und können aus demselben Material oder verschiedenen Materialien bestehen. Hierbei kann bevorzugt auch der Träger (I) oder eine mit ihm mittelbar oder unmittelbar verbundene Schicht selbst den Grundkörper für das Verstärkungselement bilden.

Die Verstärkungselemente (VI) können sich hierbei vollständig über die Fläche einer Seite des Trägers ausgenommen die transparenten Sichtbereiche erstrecken. Aber auch die Positionierung von (VI) auf Teilflächen des Trägers außerhalb des Sichtbereichs ist möglich. Hierzu zählen insbesondere Bereiche mit besonders hoher mechanischer Beanspruchung. Bei beweglichen Automobilteilen können dies beispielsweise die Bereiche sein, in denen Scharniere oder bewegliche Funktionsteile wie Scheibenwischer integriert sind.

Als Materialien für die Rippenstruktur kommen thermoplastische Kunststoffe infrage. Es eignet sich insbesondere ein unverstärkter, verstärkter und/oder gefüllter Kunststoff auf Basis von Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefin, insbesondere Polypropylen (PP), Polyethylen (PE), Polycarbonat (PC), Copolycarbonat (CoPC), Copolyestercarbonat oder eine Mischung dieser Kunststoffe.

In einer bevorzugten Ausführungsform handelt es sich bei den Kunststoffen um amorphe thermoplastische Kunststoffe, insbesondere um Polycarbonat, Copolycarbonat, Copolyestercarbonat, PC-Blends und Polymethylmethacrylat.

Das in die Rippenstruktur eingelegte Stützprofil kann einteilig oder mehrteilig sein. Es kann entweder massiv oder mit Hohlräumen, Kanälen oder dergleichen, gefertigt sein. In einfachster und einer bevorzugten Ausführung ist das Stützprofil ein I-Profil, ein L-Profil oder ein T-Profil. Möglich ist auch ein U-Profil, welches z.B. auch Rippenpaare verbindet. Es kann ein geschlossenes Profil sein, z.B. ein Rechteckrohr. In diesem Fall können die Geometrien der schmalen und breiten Seitenflächen identisch sein. Bei einer entsprechenden Geometrie kann das Stützprofil z.B. einen oder mehrere Kanäle enthalten, die zur Aufnahme von Kabeln und Schläuchen oder zur Leitung von Flüssigkeiten genutzt werden können. Das Stützprofil kann in der Geometrie seiner Flächen den Rippen entsprechen, so dass das eingelegte Profil die gleiche Höhe wie die Rippen besitzt, es kann jedoch auch niedriger oder höher als die Rippen sein, so dass es gegebenenfalls über die Rippe bzw. aus dem Rippenpaket herausragt. Die Geometrie des Stützprofils kann so ausgeführt sein, dass es weitere Funktionen z.B. als Befestigungselement übernehmen kann. In diesem Fall handelt es sich bei dem Stützprofil bereits um ein Halbzeug mit über die einfache Verstärkungsfunktion hinausgehenden Eigenschaften. Das Stützprofil kann ebenfalls so ausgeführt sein, dass eine kraft- und/oder formschlüssige Verbindung zu mindestens einem weiteren Bauteil über die Struktur des Stützprofils läuft.

Erfindungsgemäß wird mindestens eine breite Seitenfläche des Stützprofils mit einer Rippe verklebt und eine schmale Seitenfläche des Profils steht auf dem Kunststoffgrundkörper. Breite Seitenfläche des Profils und die Fläche des Kunststoffgrundkörpers stehen somit senkrecht oder annähernd senkrecht (in einem Winkel von ca. 70 - 110°) zueinander.

Das Stützprofil kann aus metallischen, Faserverbund- oder keramischen Werkstoffen sein. Es kann durch Strangpressen, Stanzen, Tiefziehen, Rollformen oder sonstigen formgebende Prozesse hergestellt werden.

Bevorzugt wird das Stützprofil aus einem metallischen Werkstoff hergestellt. In einer besonders bevorzugten Ausführungsform handelt es sich bei dem Stützprofil um ein einfaches Verstärkungsprofil aus einem Blech vorzugsweise aus Stahl, Eisen, Titan, Aluminium oder Magnesium oder Legierungen dieser Metalle. In einer besonders bevorzugten Ausführungsform ist das Stützprofil ein gewalzter Bandstahl oder ein Aluminiumstrangpressprofil.

In anderen Ausführungsformen können die Profile auch aus Keramik, Duromeren oder Kunststoff-Komposit-Werkstoffen bestehen.

Bei dem zur Verklebung verwendeten Strukturklebstoff kann es sich um handelsüblichen Klebstoff handeln, wie er beispielsweise in der Automobilindustrie zur Verklebung von Scheiben oder Blechstrukturen genutzt wird. Es können sowohl Nassklebstoffe, Kontaktklebstoffe, Schmelzklebstoffe oder Reaktionsklebstoffe eingesetzt werden. Besonders geeignet für diese Technologie sind ein- oder zweikomponentige Strukturklebstoffe auf Polyurethanbasis mit unterschiedlichen Steifigkeiten. Es können jedoch auch z.B. Klebstoffe auf Acryl/Acrylat-, Methylmethacrylat-, Silikon oder Epoxidharzbasis verwendet werden. Im Rippenpaket kann die Klebstoffschicht eine Dicke bis zu mehreren Millimetern aufweisen. Die minimale Dicke der Klebstoffschicht wird durch Anforderungen an die Flexibilität der Klebstoffschicht und damit durch die Materialien und die Geometrie der Verbundbauteile sowie die Anforderungen an das Verbundbauteil vorgegeben. Durch unterschiedliche Abstände zwischen zwei Rippen, welche über Klebetechnik mit einem Stützprofil verbunden sind, lässt sich die Dicke der Klebstoffschicht einstellen, wodurch Art und Grad der Versteifung und Entkopplung flexibel eingestellt werden können. Es kann sich bei dem Klebstoff auch um einen thermoplastisch verarbeitbaren Schmelzkleber handeln. In diesem Fall ist es möglich, Kunststoff, Schmelzkleber und Stützprofil in einem Mehrkomponenten-Spritzgießgang zum Verbundbauteil zu verbinden.

In einer bevorzugten Ausführungsform ist die Klebstoffschicht zwischen 0,5 - 10 mm dick, in einer besonders bevorzugten Ausführungsform 1 - 5 mm.

Gegebenenfalls können Klebstoff bzw. elastisches Verbindungsmaterial auch noch zusätzlich eine formschlüssige Verbindung eingehen. Bei kleineren Relativbewegungen zwischen den Verbundbauteilen dient der Klebstoff als Verbund- und Entkopplungselement. Hohe Belastungen werden von den Klebstoffflächen großflächig und nicht punktuell weitergeleitet, so dass es im Bauteil nicht zu Spannungsspitzen und den damit verbundenen Nachteilen kommt. Über den Klebstoff können so gerade bei den vorliegenden großen Bauteilen unterschiedliche Wärmeausdehungskoeffizienten kompensiert werden.

In einer bevorzugten Ausführungsform wird die Bauteiloberfläche vor Aufbringen des Klebers mit einem Primer behandelt.

Die Herstellung der Verstärkungselemente (VI) kann wie folgt realisiert werden. Zum einen kann das Verstärkungselement (VI) enthaltend einen Grundkörper und eine Rippenstruktur enthaltend mindestens eine Rippe oder mindestens ein Rippenpaar mittels Ein-, Zwei- oder Mehrkomponenten-Spritzguss- oder Extrusionsverfahren hergestellt werden, wobei weiterhin mindestens eine Fläche eines Stützprofils mit mindestens einer Rippenfläche über Klebetechnik verbunden wird. Wird ein Stützprofil mit zwei benachbarten Rippen verbunden, so kann es zunächst zwischen die Rippen eingelegt und anschließend eingeklebt werden. Es ist genauso möglich, den Klebstoff zuerst zwischen die Rippen zu pressen und anschließend das Stützprofil einzusetzen.

In einer bevorzugten Ausführungsform hat das Stützprofil lediglich über den Klebstoff bzw. das elastische Verbindungsmaterial Kontakt zum Grundkörper.

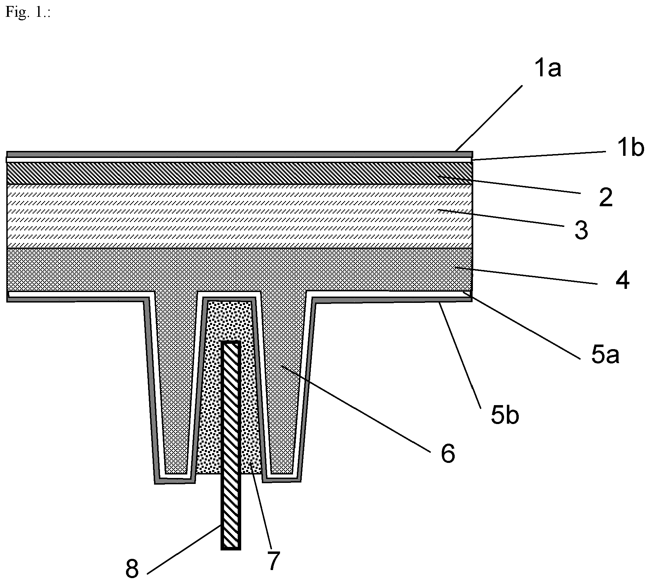

In einer bevorzugten Ausführungsform ist ein T-Stützprofil in einem U-Rippenprofil aufgenommen, wobei der Klebstoff alle 3 Seiten des U-Rippenprofils in einer gleichmäßen Dicke im Bereich von 1 - 5 mm ausfüllt (vgl. Fig. 1).

Vorzugsweise ist der Klebstoff ein 2K-Polyurethansystem mit einer Härte von Shore A 70.

In einer besonders bevorzugten Ausführungsform sind die metallischen Scharnierbauteile über ein 2K-Polyurethansystem mit einer Härte von Shore A 70 mit dem Träger oder einer mit dem Träger verbundenen Schicht verbunden.

Ein anderes mögliches Herstellungsverfahren solcher Kunststoff-Verbundbauteile ist ein Mehrkomponenten-Spritzgussverfahren, bei dem das Stützprofil bereits in die entsprechende Form eingelegt ist und der Kunststoff sowie das thermoplastische Elastomer, welches Klebstofffunktion übernimmt, eingespritzt werden.

Das erfindungsgemäße Verbundbauteil hat den Vorteil, dass an die Geometrie des Stützprofils sehr geringe Anforderungen gestellt werden. Es können einfache Verstärkungsbleche eingelegt werden, Toleranzabweichungen können durch die Dicke der Klebstoffschicht ausgeglichen werden. Durch die einfache Geometrie entsteht kein Materialverschnitt und durch die vertikale Anordnung von Stützprofil und Hauptfläche des Grundkörpers wird weniger Stützprofil benötigt. Dies bedeutet einerseits Kosteneffizienz aufgrund geringerer Materialkosten und geringerer Herstellungskosten des Stützprofils, andererseits Gewichtsreduktion des Fertigteils. Mit Hilfe der Klebstoffschichten werden auftretende Belastungen großflächig und gleichmäßig im Kunststoff verteilt, so dass es nicht zum Auftreten von Spannungsspitzen kommt. Die neue Technologie ermöglicht somit auch die Versteifung von Bauteilen aus amorphen Thermoplasten mit Metallprofilen. Über die Rippengeometrie und die Klebstoffschichtdicken können Art und Grad der Versteifung und Entkopplung sehr flexibel eingestellt werden. Durch die dämpfenden Eigenschaften der Klebstoffschicht werden Schwingungen und Geräusche unterdrückt.

Dämmstoffe (VIII) können zur Isolation und Geräuschdämmung, vorzugsweise in einem "Direct Coating"-Verfahren, auf die Innenseite der Bauteile, optional auch zwischen oder über die Verstärkungselemente, aufgebracht werden. Vorzugsweise werden hierzu Polyurethan-Systeme verwendet. In einer bevorzugten Ausführungsform wird die Dämmschicht mit einer weiteren Lack- oder Oberflächenschicht versehen, so daß auch eine optisch und haptisch ansprechende innere Oberfläche des Bauteils entsteht.

Fahrzeugbauteile im Sinne der vorliegenden Erfindung sind Heckklappen.

### Ausführungsbeispiele

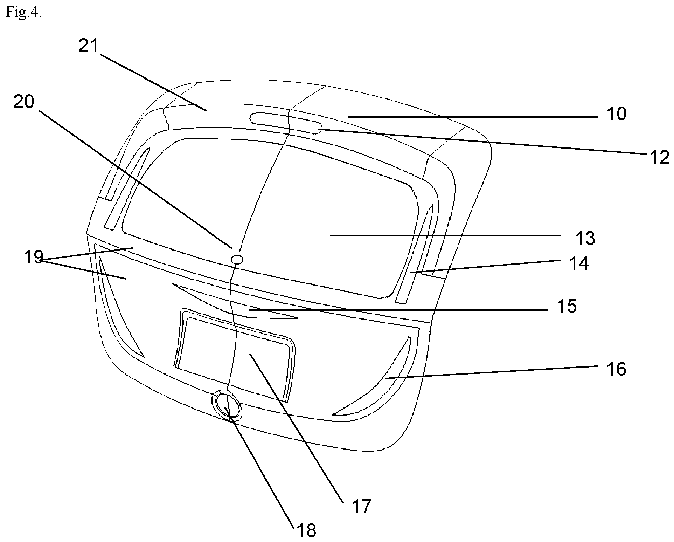

Es wurde eine Heckklappe auf der Basis eines Trägers (I) aus Makrolon® AG2677 der Fa. Bayer MaterialScience AG im Spritzprägeverfahren hergestellt. Hierbei wurden entsprechend der Figuren 1, 2 und 3 drei verschiedene Mehrschichtverbunde enthaltend den Träger (I) realisiert. Die Heckklappe enthält in einer bevorzugten Ausführungsform die Funktionselemente nach Fig.4.

Mehrschichtverbund gemäß Figur 1:
Schicht zur Erhöhung der Kratzfestigkeit (II): Kratzfestbeschichtung bestehend aus la Kratzfestlack (AS4700) und 1b Primer (SHP470 FT2050)
2: Folie wahlweise aus der Gruppe der Schichten (II), (IV) oder (VII)
3: Träger (I): Transparente Komponente: Makrolon AG2677
4: Schicht zur Ausbildung von Schwarzrändern, verstärkenden Rahmenelementen (V): Bayblend T95 MF gefärbt
5: Schicht zur Erhöhung der Kratzfestigkeit (II): bestehend aus 5a Primer (SHP470 FT2050) und 5b Kratzfestlack (AS700)
   Mechanisches Verstärkungselement (VI) bestehend aus
6: angeformtem Rippenelement
7: Kleber
8: Stützprofil in Form eines Metalleinlegers

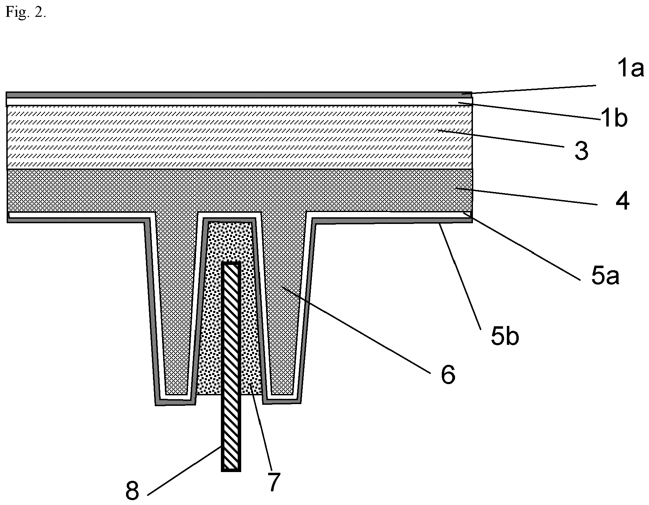

Es bedeuten in Figur 2:
Schicht zur Erhöhung der Kratzfestigkeit (II): Kratzfestbeschichtung bestehend aus 1a Kratzfestlack (AS4700) und 1b Primer (SHP470 FT2050)
3: Träger (I): Transparente Komponente: Makrolon AG2677
4: Schicht zur Ausbildung von Schwarzrändern, verstärkenden Rahmenelementen (V): Bayblend T95 MF gefärbt

Schicht zur Erhöhung der Kratzfestigkeit (II): bestehend aus 5a Primer (SHP470 FT2050) und 5b Kratzfestlack (AS4700)
Mechanisches Verstärkungselement (VI) bestehend aus
6: angeformtem Rippenelement
7: Kleber
8: Stützprofil in Form eines Metalleinlegers

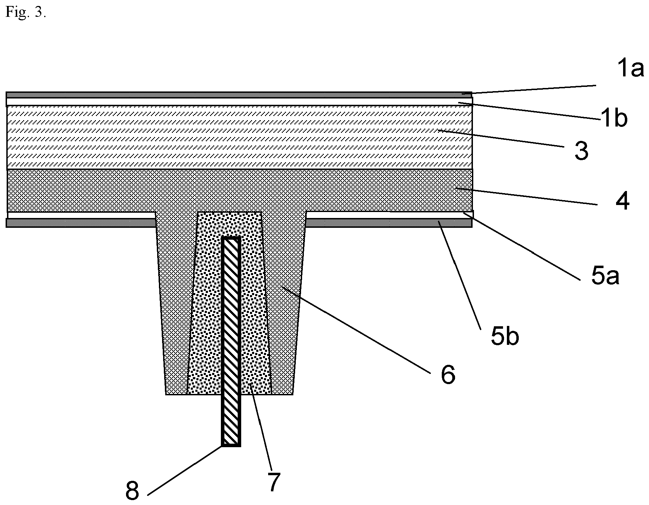

Es bedeuten in Figur 3:
Schicht zur Erhöhung der Kratzfestigkeit (II): Kratzfestbeschichtung bestehend aus 1a Kratzfestlack (AS4700) und 1b Primer (SHP470 FT2050)
3: Träger (I): Transparente Komponente: Makrolon AG2677
4: Schicht zur Ausbildung von Schwarzrändern, verstärkenden Rahmenelementen (V): Makroblend 7665

Schicht zur Erhöhung der Kratzfestigkeit (II): bestehend aus 5a Primer (SHP470 FT2050) und 5b Kratzfestlack (AS4700)
Mechanisches Verstärkungselement (VI) bestehend aus
6: angeformtem Rippenelement
7: Kleber
8: Stützprofil in Form eines Metalleinlegers

Die verwendeten Materialien sind nachfolgend charakterisiert:
Makrolon® AG2677 ist ein lineares, UV-stabilisiertes und leicht entformbares Polycarbonat auf Basis Bisphenol-A. Makrolon® AG2677 weist eine Schmelzevolumenfließrate MVR gemäß ISO 1133 von 12,5 cm³/10 min , gemessen bei 300 °C und 1,2 kg Belastung, auf. Das Produkt ist erhältlich von der Bayer MaterialScience AG, Leverkusen.

Makroblend® 7665 ist ein elastomermodifiziertes Polycarbonat Polyethylenterephthalat Blend mit 20% Mineralfüllung mit einer Schmelzevolumenfließrate MVR gemäß ISO 1133 von 14 cm³/10 min , gemessen bei 270 °C und 5 kg Belastung. Das Produkt ist erhältlich von der Bayer MaterialScience AG, Leverkusen.

Makroblend® UT235M ist ein mineralgefülltes leicht entformbares Polycarbonat Polyethylenterephthalat Blend mit einer Schmelzevolumenfließrate MVR gemäß ISO 1133 von 35 cm³/10 min , gemessen bei 270 °C und 5 kg Belastung. Das Produkt ist erhältlich von der Bayer MaterialScience AG, Leverkusen.

Bayblend® T95MF ist ein Polycarbonat ABS Blend mit 9% Mineralfüllung und einer Schmelzevolumenfließrate MVR gemäß ISO 1133 von 18 cm³/10 min, gemessen bei 260 °C und 5 kg Belastung. Das Produkt ist erhältlich von der Bayer MaterialScience AG, Leverkusen.

Kratzfestlack AS4700 ist ein thermisch härtender Lack auf Silicon-Basis, enthaltend Isopropanlol, n-Butanol und Methanol als Lösungsmittel, mit einem Feststoff-Gehalt von 25 Gew.-% , einer spezifischen Dichte von 0,92 sowie einer Viskosität gemessen bei 25 °C von 3-7. Das Produkt ist erhältlich von der Momentive Performance Materials GmbH, Leverkusen.

SHP470 ist ein Primer mit einem Feststoffgehalt von 7 Gew.-%. einer spezifischen Dichte von 0,94 und einer Viskosität bei 25 °C von 30 bis 60 basierend auf 1-Methoxy-2-propanol als Lösungsmittel. Das Produkt ist erhältlich von der Momentive Performance Materials GmbH, Leverkusen.

Kleber ist ein hochviskoses, luftfeuchtigkeitshärtendes 1K-Polyurethansystem (beispielsweise DOW Betaseal 1842).

Zur Herstellung der Mehrschichtverbunde der Ausführungsbeispiele sind unterschiedliche Verfahren möglich:
Schritte zur Herstellung des Mehrschichtverbundes gemäß Figur 1:
Prozedur 1- Einlegen der Folie 2 ins Spritzgießwerkzeug, - Schließen des Werkzeuges
- Einspritzen von 3 (Makrolon® AG2677), anschließende Abkühlung auf <145°C Bauteiltemperatur (weiter bevorzugt <130°C, besonders bevorzugt <120°C), nicht aber unter 80 °C.
- Drehen der Kavität in die nächste Position, zwecks Einspritzen von 4 (Beim Schließen des Werkzeuges in dieser Position entsteht ein Zwischenraum zwischen 1. verfestigter Materialkomponente und Werkzeugwand.
- Einspritzen von 4 anschließende Abkühlung auf <145°C Bauteiltemperatur (weiter bevorzugt <130°C, besonders bevorzugt <120°C), nicht aber unter 80 °C.

In einer alternativen Ausführungsform der Prozedur 1 kann bei der Herstellung auch auf die Folie 2 verzichtet werden.

Prozedur 2: Beschichtung - Alternative A), im Anschluß an Prozedur 1
- Entformung
- Abkühlen des Bauteils auf Raumtemperatur
- Flutbeschichten des Bauteils mit dem Primer SHP470 FT2050 1b, 5a
- Abdunsten der Lösemittel (vorzugsweise mindestens 30 min)
- Einbrennen/Trocknen des Primers bei 20°C [MW1] bis 200°C, vorzugsweise 40°C bis 130°C (vorzugsweise für 45 min bei 130 °C).
- Abkühlen auf Raumtemperatur
- Beschichten mit Decklack: AS4700 1a, 5b
- Abdunsten der Lösemittel (vorzugsweise mindestens 30 min)- Einbrennen/Trocknen des Decklacks 1a, 5b bei 20°C bis 200°C, vorzugsweise 40°C bis 130°C (vorzugsweise für 45 min bei 130 °C).- Abkühlen auf Raumtemperatur
- Einbringen des Klebers 7 zwischen die Rippenelemente
- Einbetten des Versteifungselementes (Metall) 8 in den Kleber
- Aushärten des Klebers

Prozedur 3: Alternativbeschichtung zu Prozedur 2: Beschichtung als Direct Coating im Anschluß an Prozedur 1:
- Drehen der Kavität in die nächste Position, zwecks Einspritzen des PU-Lacksystems (Beim Schließen des Werkzeuges in dieser Position entsteht ein Zwischenraum zwischen 1. verfestigter Materialkomponente und Werkzeugwand, (optional kann dieser Schritt auch vor dem Hiterspritzen mit der Schicht V oder VI erfolgen)
- Einspritzen des PU Lack-Systems
- Entformung
- Abkühlen auf Raumtemperatur
- Einbringen des Klebers zwischen die Rippenelements
- Einbetten des Versteifungselementes (Metall) in den Kleber
- Aushärten des Klebers

Beschreibung der Funtionselemente (Fig. 4)
10 Heckklappe
12 Transparenter Bereich für 3. Bremsleuchte
13 Transparenter Bereich als Heckscheibe
14 Transparenter Bereich für Blinker
15 Transparenter Bereich als Fenster
16 Transparenter Bereich für Rückleuchten
17 Kennzeichenmulde
18 Logo
19 Schwarz hinterlegter Bereich
20 Durchbruch für Scheibenwischer
21 Spoiler

Durch die Formgebung des Bauteils können verschiedene Funktionselemente integriert werden. Durch Ausformung des oberen Abschlußbereichs wird beispielsweise ein Spoiler (21) gebildet, in dem weiterhin ein transparenter Bereich für die dritte Bremsleuchte (12) integriert ist. Weiterhin sind transparente Bereiche für Blinker (14) und Rückleuchten (16) vorgesehen, sowie ein weiteren transparenter Bereich unterhalb der Scheibenwischeraufnahme (mit integriertem Durchbruch (20). Ferner sind Mulden für Logo (18) und Kennzeichen (17) integriert.

## Patentansprüche

1. Heckklappe (10), umfassend mehrere Funktionselemente, die in der Heckklappe integral ausgeformt oder eingebunden sind, wobei die Heckklappe einteilig und fugenlos ist und fugenlos bedeutet, dass die äußere Oberfläche des Bauteils keine Fugen oder Übergänge mit einer Tiefe von mehr als 0,20 mm aufweist und mindestens einen durchgehenden Träger aus einem thermoplastischen Kunststoff umfasst, wobei die Heckklappe mindestens einen transparenten Bereich (12, 13, 14, 15, 16) aufweist, **dadurch gekennzeichnet dass** auf den Träger (3) mindestens eine Schicht (4) aufgebracht ist, die Schwarzränder und/oder verstärkende Rahmenelemente bildet und der lineare thermische Ausdehnungskoeffizient des Materials des Schwarzrandes und/ oder des verstärkenden Rahmenelementes in Längsrichtung um 1x10⁻⁵ bis 3x10⁻⁵ (mm/mm K) niedriger ist als der des Trägermaterials.

2. Heckklappe (10) nach Anspruch 1, **dadurch gekennzeichnet, dass** der Träger (3) eine Dicke von 3 - 7 mm, bevorzugt von 4 - 6 mm, besonders bevorzugt von 4,5 - 5,5 mm aufweist.

3. Heckklappe (10) nach Anspruch 1 oder 2, **dadurch gekennzeichnet, dass** die Dicke des Trägers (3) über die gesamte Heckklappe maximal um 10%, vorzugsweise maximal um 5% variiert.

4. Heckklappe (10) nach Anspruch 1, **dadurch gekennzeichnet, dass** der thermoplastische Kunststoff des Trägers (3) Polycarbonat ist.

5. Heckklappe (10) nach Anspruch 4, **dadurch gekennzeichnet, dass** das Polycarbonat ein Molekulargewicht M_{w} von 25.000 bis 27.000 g/mol aufweist.

6. Heckklappe (10) nach einem der vorhergehenden Ansprüche, **dadurch gekennzeichnet, dass** die Schicht (4) die Schwarzränder oder verstärkende Rahmenelemente bildet Blends umfasst, welche
entweder (i) 10 bis 90 Gew.-% Polycarbonat und 5 bis 60 Gew.-% mindestens eines Polyesters oder
(ii) Zusammensetzungen umfassend A) und B) enthalten, wobei
A) 60 bis 95 Gew.-Teile, bezogen auf die Summe der Komponenten A) und B), mindestens eines aromatischen Polycarbonats und
B) 5 bis 40 Gew.-Teile, bezogen auf die Summe der Komponenten A) und B), mindestens eines Acrylnitrilbutadienstyrols
sind, wobei sich die Gewichtsteile der Komponenten A) und B) zu 100 addieren und
wobei das Material des Schwarzrands oder des verstärkenden Rahmenelements durch partielles Hinterspritzen des Trägers mit diesem verbunden wird.

7. Heckklappe (10) nach einem der vorhergehenden Ansprüche, **dadurch gekennzeichnet, dass** die Heckklappe (10) mechanische Verstärkungselemente (6, 7, 8) umfasst.

8. Heckklappe (10) nach einem der vorhergehenden Ansprüche, **dadurch gekennzeichnet, dass** der Träger (3) mindestens eine weitere Schicht aufweist, ausgewählt aus der Gruppe, die
- Schichten zur Erhöhung der Kratzfestigkeit (1a, 1b),
- Schichten zum Schutz vor Witterungseinflüssen,
- farbgebende Schichten enthaltend Farbmittel und/oder Pigmente (2),
- mechanische Verstärkungselemente (6, 7, 8),
- Funktionsschichten ausgewählt aus der Gruppe, die Antibeschlag-, Antireflexschichten und Schichten zur Transparenzsteuerung durch Elektrochromie, Thermotropie und Thermochromie, umfasst,
- Dämm- und Isolierschichten,
umfasst.

9. Heckklappe nach einem der vorhergehenden Ansprüche, **dadurch gekennzeichnet, dass** mindestens ein Funktionselement enthalten ist, ausgewählt aus der Gruppe, die Scharniere, Heizelemente, Antennen, Schließfunktionalitäten, Lampengehäuse /-aufnahmen, Kennzeichenbeleuchtungen, hochgesetzte Bremsleuchten, Scheibenwischer (und -motor)aufnahmen (20), Kennzeichenmulden (17), Logomulden (18), Spoiler (21), Stylinglinien, Strukturelemente für das Wassermanagement, Nummernschildaufnahmen außen oder innen und Solarmodule umfasst.

10. Heckklappe (10) nach einem der vorhergehenden Ansprüche, **dadurch gekennzeichnet, dass** das Trägermaterial in Bereichen weiterer Schichten auf der Auftragsseite der Schichten in der Dicke derart reduziert ist, dass die Dicke der zusätzlichen Schicht(en) der reduzierten Dicke des Trägermaterials entspricht.

11. Heckklappe (10) nach einem der vorhergehenden Ansprüche, **dadurch gekennzeichnet, dass** verschiedene Bereiche des Träger (3) durch Anguss aus unterschiedlichen thermoplastischen Polymeren gefertigt werden, wobei mindestens ein Abschnitt transparent und ein Abschnitt nicht transparent ist..

12. Heckklappe (10) nach einem der vorhergehenden Ansprüche, **dadurch gekennzeichnet, dass** es folgenden Schichtaufbau aufweist:
a) Schicht zur Erhöhung der Kratzfestigkeit (1a, 1b),
b) IR-Schutzfolie (2),
c) Träger (3),
d) Schicht (4), die Schwarzränder und verstärkende Rahmenelemente bildet,
e) Schicht zur Erhöhung der Kratzfestigkeit (5)
f) Mechanisches Verstärkungselement aus Stützprofil (8) verbunden über elastischen Klebstoff (7) mit einem angeformtem Rippenelement (6).

13. Heckklappe (10) nach einem der vorhergehenden Ansprüche, **dadurch gekennzeichnet, dass**, fugenlos bedeutet, dass die äußere Oberfläche des Bauteils keine Fugen oder Übergänge mit einer Tiefe von mehr als 0,15 mm aufweist, bevorzugt von mehr als 0,10 mm.

14. Verfahren zur Herstellung einer Heckklappe (10) nach Anspruch 1, welche einteilig und fugenlos ist wobei fugenlos bedeutet, dass die äußere Oberfläche des Bauteils keine Fugen oder Übergänge mit einer Tiefe von mehr als 0,20 mm aufweist und mindestens einen durchgehenden Träger (3) aus einem thermoplastischen Kunststoff umfasst, wobei die Heckklappe (10) mindestens einen transparenten Bereich (12, 13, 14, 15, 16) aufweist, **dadurch gekennzeichnet, dass** auf den Träger (3) mindestens eine Schicht (4) aufgebracht ist, die Schwarzränder und/oder verstärkende Rahmenelemente bildet und der lineare thermische Ausdehnungskoeffizient des Materials des Schwarzrandes und/ oder des verstärkenden Rahmenelementes in Längsrichtung um 1x10⁻⁵ bis 3x10⁻⁵ (mm/mm K) niedriger ist als der des Trägermaterials, wobei das Verfahren die Schritte umfasst:
- optional Einlegen einer Folie (2) in ein Spritzgießwerkzeug, Schließen des Werkzeuges,
- Einspritzen eines Trägers (3) und anschließende Abkühlung auf <145°C Bauteiltemperatur,
- Drehen der Kavität in die nächste Position zur Erzeugung eines Zwischenraums zwecks Einspritzen eines Schwarzrandes (4) und/ oder des verstärkenden Rahmenelementes,
- Einspritzen des Schwarzrandes (4) und/ oder des verstärkenden Rahmenelementes und anschließende Abkühlung auf <145°C Bauteiltemperatur,
-
(i) • Entformung,
• Abkühlen des Bauteils auf Raumtemperatur,
• optional Flutbeschichten des Bauteils mit einem Primer (1b, 5a),
• Abdunsten der Lösemittel,
• Einbrennen/Trocknen des Primers (1b, 5a) bei 20°C bis 200°C, vorzugsweise 40°C bis 130°C,
• Abkühlen auf Raumtemperatur,
• Beschichten mit einem Decklack (la, 5b),
• Abdunsten von Lösemittel,
• Einbrennen/Trocknen des Decklacks (la, 5b) bei 20°C bis 200°C, vorzugsweise 40°C bis 130°C,
alternativ
(ii)
• Drehen der Kavität in die nächste Position, zum Einspritzen eines PU-Lacksystems,
• Einspritzen des PU Lack-Systems,
• Entformung,
- Abkühlen auf Raumtemperatur,
- Einbringen eines Klebstoffs (7) zwischen die Rippenelemente (6),
- Einbetten eines Versteifungselementes (8) in den Klebstoffs,
- Aushärten des Klebstoffs.

## Claims

1. Tailgate (10) comprising a plurality of functional elements which are integrally formed or incorporated in the tailgate, wherein the tailgate is in one piece and seamless and seamless means that the external surface of the component has no seams or transitions having a depth of greater than 0.20 mm, and comprises at least one continuous carrier made of a thermoplastic, wherein the tailgate has at least one transparent region (12, 13, 14, 15, 16), **characterized in that** at least one layer (4) which forms black edges and/or reinforcing frame elements is applied to the carrier (3), and the linear coefficient of thermal expansion of the material in the black edge and/or the reinforcing frame element in the longitudinal direction is lower by 1 × 10⁻⁵ to 3 × 10⁻⁵ (mm/mm K) than that of the carrier material.

2. Tailgate (10) according to Claim 1, **characterized in that** the carrier (3) has a thickness of 3-7 mm, preferably of 4-6 mm, particularly preferably of 4.5-5.5 mm.

3. Tailgate (10) according to Claim 1 or 2, **characterized in that** the thickness of the carrier (3) varies by at most 10%, preferably by at most 5%, over the entire tailgate.

4. Tailgate (10) according to Claim 1, **characterized in that** the thermoplastic of the carrier (3) is polycarbonate.

5. Tailgate (10) according to Claim 4, **characterized in that** the polycarbonate has a molecular weight M_{w} of 25,000 to 27,000 g/mol.

6. Tailgate (10) according to any one of the preceding claims, **characterized in that** the layer (4) which forms black edges or reinforcing frame elements comprises blends which
contain either (i) 10 to 90 wt% of polycarbonate and 5 to 60 wt% of at least one polyester, or
(ii) compositions comprising A) and B), wherein
A) is 60 to 95 weight-parts, in relation to the total of the components A) and B), of at least one aromatic polycarbonate, and
B) is 5 to 40 weight-parts, in relation to the total of the components A) and B), of at least one acrylonitrile butadiene styrene,
wherein the weight-parts of the components A) and B) add up to 100, and
wherein the material of the black edge or of the reinforcing frame element is connected to the carrier by partial back injection of the carrier.

7. Tailgate (10) according to any one of the preceding claims, **characterized in that** the tailgate (10) comprises mechanical reinforcing elements (6, 7, 8) .

8. Tailgate (10) according to any one of the preceding claims, **characterized in that** the carrier (3) has at least one further layer, selected from the group which comprises
- layers for increasing the scratch resistance (1a, 1b),
- layers for protection from weathering influences,
- pigmenting layers containing colourants and/or pigments (2),
- mechanical reinforcing elements (6, 7, 8),
- functional layers selected from the group of antifog layers, antireflective layers, and layers for transparency control by electrochromism, thermotropism, and thermochromism,
- insulation layers.

9. Tailgate according to any one of the preceding claims, **characterized in that** at least one functional element is contained, selected from the group which comprises hinges, heating elements, antennas, closing functionalities, lamp housings/receptacles, number plate illuminations, high-mounted brake lights, windscreen wiper (and windscreen wiper motor) receptacles (20), number plate troughs (17), logo troughs (18), spoilers (21), styling lines, structural elements for water management, external or internal number plate receptacles, and solar modules.

10. Tailgate (10) according to any one of the preceding claims, **characterized in that** the carrier material is reduced in thickness in regions of further layers on the application side of the layers such that the thickness of the additional layer(s) corresponds to the reduced thickness of the carrier material.

11. Tailgate (10) according to any one of the preceding claims, **characterized in that** various regions of the carrier (3) are manufactured by injection moulding from different thermoplastic polymers, wherein at least one section is transparent and one section is nontransparent.

12. Tailgate (10) according to any one of the preceding claims, **characterized in that** it has the following layer structure:
a) layer for increasing the scratch resistance (1a, 1b),
b) IR protective film (2),
c) carrier (3),
d) layer (4) which forms black edges and reinforcing frame elements,
e) layer for increasing the scratch resistance (5),
f) mechanical reinforcing element made of support profile (8) connected via elastic adhesive (7) to a moulded-on rib element (6).

13. Tailgate (10) according to any one of the preceding claims, **characterized in that** seamless means that the external surface of the component has no seams or transitions having a depth of greater than 0.15 mm, preferably of greater than 0.10 mm.

14. Method for producing a tailgate (10) according to Claim 1, which is in one piece and seamless and where seamless means that the external surface of the component has no seams or transitions having a depth of greater than 0.20 mm, and comprises at least one continuous carrier (3) made of a thermoplastic, wherein the tailgate (10) has at least one transparent region (12, 13, 14, 15, 16), **characterized in that** at least one layer (4) which forms black edges and/or reinforcing frame elements is applied to the carrier (3), and the linear coefficient of thermal expansion of the material in the black edge and/or in the reinforcing frame element in the longitudinal direction is lower by 1 × 10⁻⁵ to 3 × 10⁻⁵ (mm/mm K) than that of the carrier material, wherein the method comprises the following steps:
- optionally laying a film (2) in an injection mould, closing the mould,
- injecting a carrier (3) and subsequently cooling to < 145°C component temperature,
- rotating the cavity into the next position to create an intermediate space for the purpose of injecting a black edge (4) and/or the reinforcing frame element,
- injecting the black edge (4) and/or the reinforcing frame element and subsequently cooling to < 145°C component temperature,
(i) • demoulding
• cooling the component to room temperature,
• optional flood coating of the component using a primer (1b, 5a),
• evaporating the solvent,
• firing/drying the primer (1b, 5a) at 20°C to 200°C, preferably 40°C to 130°C,
• cooling to room temperature,
• coating with a cover lacquer (1a, 5b),
• evaporation of solvent,
• firing/drying the cover lacquer (1a, 5b) at 20°C to 200°C, preferably 40°C to 130°C,
alternatively
(ii) • rotating the cavity into the next position for injecting a PU lacquer system,
• injecting the PU lacquer system,
• demoulding,
- cooling to room temperature,
- introducing an adhesive (7) between the rib elements (6),
- embedding a stiffening element (8) in the adhesive,
- curing the adhesive.

## Revendications

1. Hayon (10), comprenant une pluralité d'éléments fonctionnels qui sont intégralement formés ou insérés dans le hayon, le hayon étant d'une seule pièce et sans joints et sans joints signifiant que la surface extérieure du composant ne comporte pas de joints ou de transitions d'une profondeur supérieure à 0,20 mm et comprend au moins un support continu en matière thermoplastique, le hayon comportant au moins une région transparente (12, 13, 14, 15, 16), **caractérisé en ce qu'**au moins une couche (4) est appliquée sur le support (3), laquelle forme des bords noirs et/ou des éléments de cadre de renforcement et le coefficient de dilatation thermique linéaire du matériau du bord noir et/ou de l'élément de cadre de renforcement dans la direction longitudinale est inférieur de 1 x 10⁻⁵ à 3 x 10⁻⁵ (mm/mm K) à celui du matériau de support.

2. Hayon (10) selon la revendication 1, **caractérisé en ce que** le support (3) a une épaisseur de 3 à 7 mm, de préférence de 4 à 6 mm, de manière particulièrement préférée de 4,5 à 5,5 mm.

3. Hayon (10) selon la revendication 1 ou la revendication 2, **caractérisé en ce que** l'épaisseur du support (3) sur tout le hayon varie de 10 % maximum, de préférence de 5 % maximum.

4. Hayon (10) selon la revendication 1, **caractérisé en ce que** la matière thermoplastique du support (3) est du polycarbonate.

5. Hayon (10) selon la revendication 4, **caractérisé en ce que** le polycarbonate a un poids moléculaire M_{w} de 25 000 à 27 000 g/mol.

6. Hayon (10) selon l'une des revendications précédentes, **caractérisé en ce que** la couche (4) comprend des bords noirs ou des éléments de cadre de renforcement formés de mélanges qui contiennent
(i) 10 à 90 % en poids de polycarbonate et 5 à 60 % en poids d'au moins un polyester ou
(ii) des compositions comprenant A) et B),
A) 60 à 95 parties en poids, sur la base de la somme des composants A) et B), d'au moins un polycarbonate aromatique et
B) 5 à 40 parties en poids, sur la base de la somme des composants A) et B), d'au moins un acrylonitrile-butadiène-styrène,
les parties en poids des composants A) et B) totalisant 100 et
le matériau du bord noir ou de l'élément de cadre de renforcement étant relié au support par une contre-injection partielle de ce dernier.

7. Hayon (10) selon l'une des revendications précédentes, **caractérisé en ce que** le hayon (10) comprend des éléments de renforcement mécanique (6, 7, 8) .

8. Hayon (10) selon l'une des revendications précédentes, **caractérisé en ce que** le support (3) comporte au moins une autre couche, choisie dans le groupe comprenant
- des couches destinées à augmenter la résistance aux rayures (1a, 1b),
- des couches destinées à protéger contre les influences météorologiques,
- des couches de coloration contenant des colorants et/ou des pigments (2),
- des éléments de renforcement mécaniques (6, 7, 8),
- des couches fonctionnelles choisies dans le groupe comprenant les couches antichocs, les couches antireflets et les couches de commande de transparence par électrochromie, thermotropie et thermochromie,
- des couches d'isolation et d'insonorisation.

9. Hayon selon l'une des revendications précédentes, **caractérisé en ce qu'**au moins un élément fonctionnel est inclus qui est choisi dans le groupe qui comprend des charnières, des éléments chauffants, des antennes, des fonctionnalités de fermeture, des boîtiers/réceptacles de lampe, des feux de plaque d'immatriculation, des feux de freinage surélevés, des logements d'essuie-glaces (et de moteur) (20), des évidements de plaque d'immatriculation (17), des évidements de logo (18), des spoilers (21), des lignes de style, des éléments structurels pour la gestion de l'eau, des réceptacles de plaque d'immatriculation à l'extérieur ou à l'intérieur et des modules solaires.

10. Hayon (10) selon l'une des revendications précédentes, **caractérisé en ce que** le matériau de support situé dans des régions d'autres couches du côté d'application des couches est réduit en épaisseur de sorte que l'épaisseur de l'au moins une couche supplémentaire correspond à l'épaisseur réduite du matériau de support.

11. Hayon (10) selon l'une des revendications précédentes, **caractérisé en ce que** différentes régions du support (3) sont réalisées par coulée de différents polymères thermoplastiques, au moins une portion étant transparente et une portion n'étant pas transparente.

12. Hayon (10) selon l'une des revendications précédentes, **caractérisé en ce qu'**il comporte la structure en couches suivante :
a) couche destinée à augmenter la résistance aux rayures (1a, 1b),
b) film de protection IR (2),
c) support (3),
d) couche (4) qui forme des bords noirs et des éléments de cadre de renforcement,
e) couche destinée à augmenter la résistance aux rayures (5)
f) élément de renforcement mécanique formé d'un profilé de support (8) relié par un adhésif élastique (7) à un élément nervuré moulé (6).

13. Hayon (10) selon l'une des revendications précédentes, **caractérisé en ce que** sans couture signifie que la surface extérieure du composant ne comporte pas de joints ou de transitions d'une profondeur supérieure à 0,15 mm, de préférence supérieure à 0,10 mm.

14. Procédé de fabrication d'un hayon (10) selon la revendication 1, qui est d'une seule pièce et sans couture, sans couture signifiant que la surface extérieure du composant ne comporte pas de joints ou de transitions d'une profondeur supérieure à 0,20 mm et comprenant au moins un support continu (3) en matière thermoplastique, le hayon (10) comprenant au moins une région transparente (12, 13, 14, 15, 16), **caractérisé en ce qu'**au moins une couche (4) est appliquée sur le support (3), laquelle forme les bords noirs et/ou les éléments de cadre de renforcement, et le coefficient de dilatation thermique linéaire du matériau du bord noir et/ou de l'élément de cadre de renforcement dans la direction longitudinale est inférieur de 1 x 10⁻⁵ à 3 x 10⁻⁵ (mm/mm K) à celui du matériau de support, le procédé comprenant les étapes suivantes :
- insérer éventuellement un film (2) dans un moule d'injection, fermer le moule,
- injecter un support (3) puis refroidir à une température de composant < 145 °C,
- faire tourner la cavité dans la position suivante pour créer un espace intermédiaire pour injecter un bord noir (4) et/ou l'élément de cadre de renforcement,
- injecter le bord noir (4) et/ou l'élément de cadre de renforcement puis refroidir à une température de composant < 145 °C,
-
(i)
• démouler,
• refroidir le composant à la température ambiante,
• revêtir par injection éventuellement le composant avec un primaire d'apprêt (1b, 5a),
• laisser les solvants s'évaporer,
• cuire/sécher le primaire d'apprêt (1b, 5a) à une température allant de 20 °C à 200 °C, de préférence de 40 °C à 130 °C,
• refroidir à la température ambiante,
• revêtir d'une couche de finition (la, 5b),
• laisser le solvant s'évaporer,
• cuire/sécher la couche de finition (la, 5b) à une température allant de 20 °C à 200 °C, de préférence de 40 °C à 130 °C,
en variante
(ii)
• faire tourner la cavité dans la position suivante pour injecter un système de peinture PU,
• injecter le système de peinture PU,
• démouler,
- refroidir à température ambiante,
- introduire un adhésif (7) entre les éléments nervurés (6),
- incorporer un élément de renforcement (8) dans l'adhésif,
- faire durcir l'adhésif.
